# EUROPEAN PATENT SPECIFICATION

(11) **EP 0 933 288 B1**
(45) Date of publication and mention of the grant of the patent: **20.04.2005**
(21) Application number: 99101382.2
(22) Date of filing: 25.01.1999
(51) Int. Cl.: B62H 3/00, B62H 3/04

(54) **Parking device for two-wheeler**
Einrichtung zum Abstellen von Zweiradfahrzeugen
Dispositif de parcage pour véhicule à deux roues.

(30) Priority: 28.01.1998 IT MI980152
(43) Date of publication of application: 04.08.1999
(73) Proprietor: PUBLILOCK S.R.L., 21013 Gallarate (Varese) (IT)
(72) Inventor: Venegoni, Rosanna, 21012 Cassano Magnano(VA) (IT)
(74) Representative: Carloni, Franco

(56) References cited:
- NL-C- 31 266
- US-A- 3 762 569
- US-A- 3 887 075
- US-A- 3 920 126
- US-A- 4 015 718

## Description

The present invention generally relates to the field of parking equipment for two-wheeled vehicles and, more particularly, a parking device capable of supporting these vehicles and securing them against theft when they are parked in a unprotected parking area. The invention also relates to a parking area monitoring and controlling system, a parking management system for supervising and controlling an array of parking devices according to the invention, which are installed in the parking area.

As known, in the recent years there is occurred a continuous development of two-wheeled vehicles as means of private transportation within the boundaries of metropolitan areas, as a result of a greater social consciousness of the problems of street traffic and environmental pollution caused thereby.

Urged by the users of two-wheeled vehicles calling for a greater co-ordination and safety, many municipalities have assigned specific structures for the circulation, transit and parking of such vehicles in order to regulate their circulation and parking and to avoid any obstacle to and interference with the circulation of motor-vehicles.

In particular, with regard to the areas assigned for parking two-wheeled vehicles, generally they are equipped with supporting structures where such vehicles can be left temporarily.

For example, at the present time, a wide use is made of the so called bicycle-racks which consist of reverse U or V shaped tubular sections that are arranged in pairs to form an array of support members, each of which is adapted to house a wheel of the vehicle. These racks are connected to ground or to a fixed structure. For example, US 4,015,718 discloses a bicycle storage rack of this kind which is constructed and designed to hold in a secure manner one or more bicycles. The rack includes a bicycle receiving member having a locking means for locking bicycle wheels and frame together and to the bicycle receiving member.

Another kind of structure which also is widely used consists of a heavy support block which rests on ground and is provided with a pair of facing plate members which together with the support block define a stand for the purpose of removably holding a wheel of a two-wheeled vehicle or the like.

However, these structures generally have the disadvantage in that they do not provide means for securing the wheel in its housing and, therefore, they are not capable of protecting the vehicle against theft. Consequently, the user is compelled to bring always with himself a chain or the like and a padlock for fastening the vehicle to the supporting structure.

Another disadvantage of these structures is that they do not yield a profit to whom, e.g. the municipalities, uses them to equip an area as a parking for two-wheeled vehicles and this because these structures do not permit any pay to be collected for the parked vehicle unless arrangements are made for surveillance personnel which, on the other hand, would be too expensive. To overcome this disadvantage, US 3,762,569 proposes a bicycle storage rack having a coin-controlled key-operated locking device associated therewith and a binder member adapted to secure the bicycle to the storage rack through the operation of the locking device. However, the bicycle storage rack disclosed in this document has the disadvantage that it cannot be easily adapted to bicycles, and generally to two-wheeled vehicles having wheels of different diameter and tyres of different width.

The aim of the present invention is to obviate the aforementioned disadvantages by providing a parking device for two-wheeled vehicles which, in addition to act as a support member for the parked vehicle, is also capable of securing the vehicle against theft.

Another object of the present invention is to provide a parking device for two-wheeled vehicles which can be used with any kind of vehicles, independently from the diameter of the wheels and the width of the tyres.

Still another object of the present invention is to provide a parking device for two-wheeled vehicles which offers the user a reliable protection against theft of the parked vehicle.

A further object of the present invention is to provide a parking device for two-wheeled vehicles which is effective, reliable and easy to use.

These and other objects of the present invention will be clearly understood from the following description and are achieved with a parking device for two-wheeled vehicles, whereby it comprises:
- a supporting frame,
- a housing adapted to removably receive a wheel of the vehicle,
- a pair of extensible arm members connected to each other and each pivotally jointed at one end to the supporting frame,
- a bolt adapted to slide in a hollow member provided at the free end of one of the arm members without being disengageable therefrom,
- a lock arranged at the free end of the other one of said arm members and adapted to cooperate with the bolt for securing the vehicle to the supporting frame.

Further features and advantages of the present invention will be clearly understood from the following detailed description which is given here for explanatory purposes only, without restriction to the extent of the invention, in connection with the accompanying drawings, wherein:
Fig.1 is a side elevation view of the device according to the present invention,
Fig. 2 is a top plan view thereof,

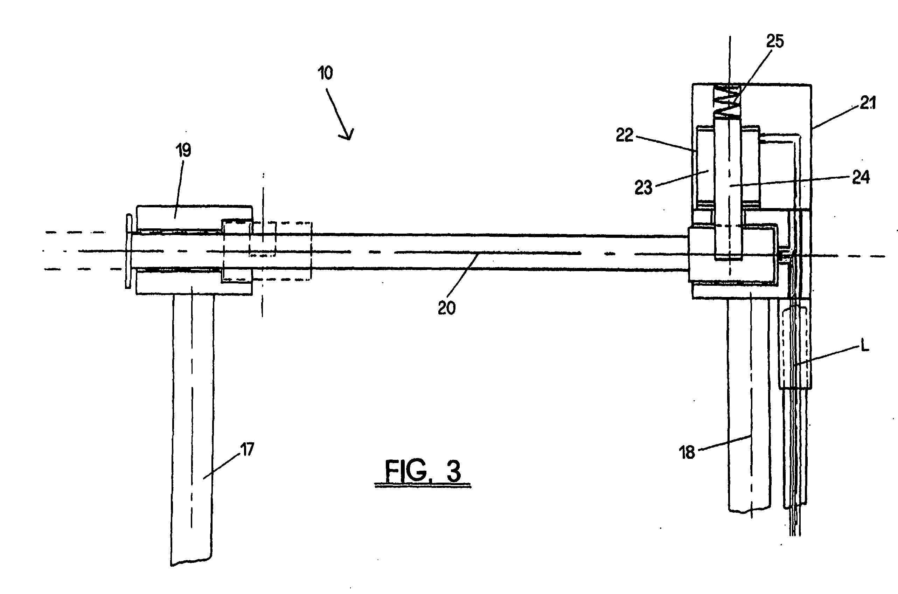

Fig. 3 is an enlarged view of a electric solenoid operated lock used in the device according to the present invention, and
Fig. 4 is a block diagram of a parking area monitoring and control system for supervising and controlling an array of parking devices of Fig. 1 which are installed in the parking area.

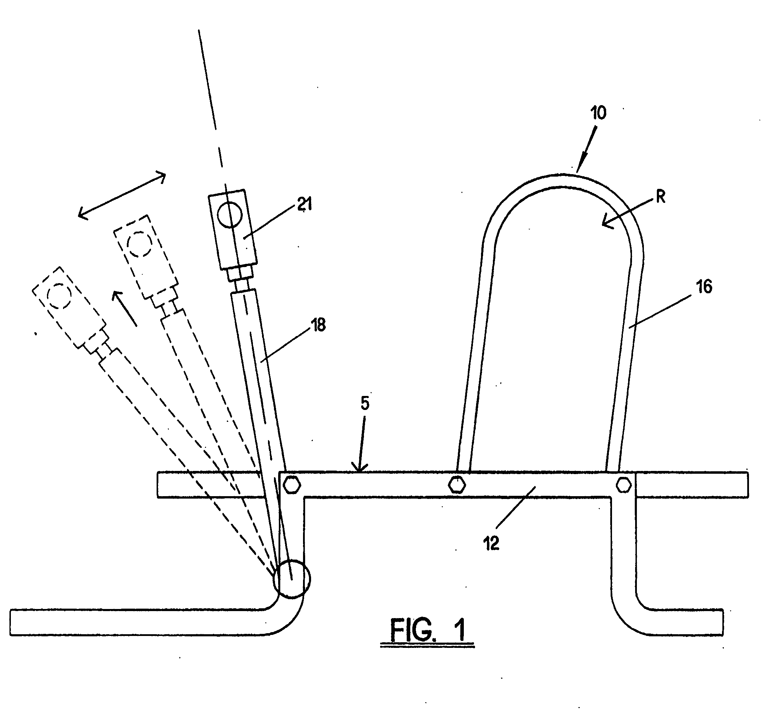

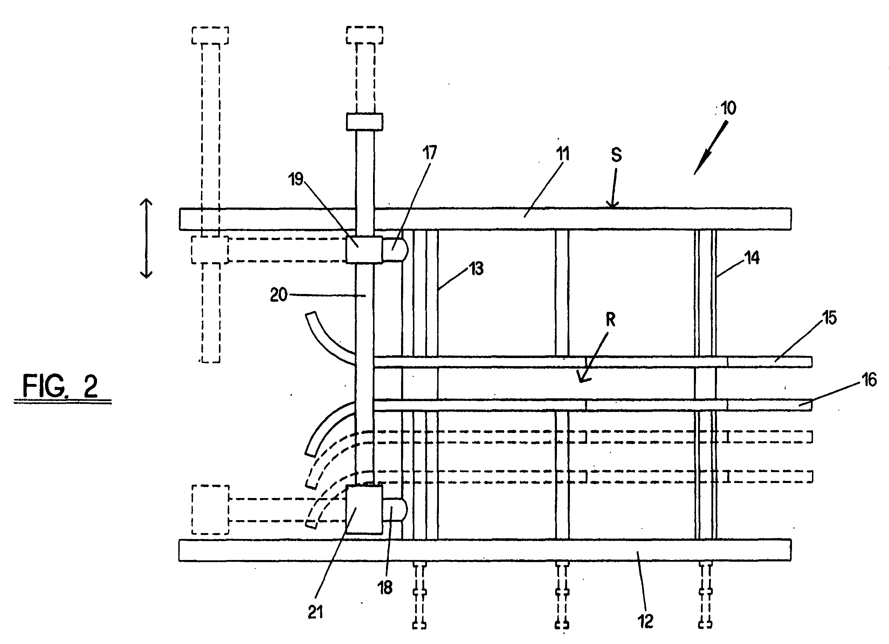

Referring to Figs. 1 and 2 of the drawings, there is shown a parking device for two-wheeled vehicles according to the present invention, generally designated by 10. The device 10 is formed of an assembly of metal tubular members 11,12,13 and 14 which are firmly connected to each other so as to form a supporting frame S. A pair of upright U-shaped members 15 and 16 are arranged in spaced relationship on the supporting frame S so as to define a housing R which is adapted to removably hold and laterally support a wheel of the parked vehicle.

The supporting frame S requires to be connected to ground or to a fixed structure. For example, it may be connected to a bedplate made of a metal, stone, concrete or any other suitable material, which can be integrated in the pavement of the parking area.

According to a feature of the present invention, the position of one of the upright U-shaped members which form the housing R, i.e. member 16 in the Figs., is adjustable by means of a screw mechanism, thus permitting the distance between the U-shaped members 15 and 16 to be adjusted so as to accommodate the housing R for wheels with tyres of different widths.

According to another feature of the present invention, the device 10 comprises two telescopic arm members 17 and 18 connected to each other and jointed each at one end to the supporting frame S so as to be pivotable in a plane vertical to ground. The first arm member 17 is provided at its free end with an articulated hollow cylindric or prismatic member 19 in which a bolt 20 is slidably inserted without the possibility of disengagement therefrom. The second arm member 18 is provided at its free end with a lock 21 adapted to cooperate with the bolt 20 for the purpose of fastening it. The arm members 17 and 18 are kept in an almost upright rest position by means of a tension spring (non illustrated) which is connected at one end to the supporting frame S and at the other end to one of said arm members 17 or 18.

Of course, instead of a bolt 20, equivalent fastening means may be used, e.g. a flexible metal cable or a metal chain. Such fastening means will be connected at one end to the arm member 17 and they will be provided at the other end with a pin for insertion into the lock 21. Also, a pneumatic cylinder may be substituted for the tension spring.

In the following, for explanatory purposes a description will be given of an electromechanical lock which is well suited for use in the device according to the invention.

Preferably, the lock 21 will be an electric solenoid operated lock. The lock 21 will include a control device 22 which is formed of a coil 23 and a movable core 24 which operates with a plunging motion. The movable core 24 acts as a fastening pin for the lock 20 and is urged by a compression spring 25 which keeps it in a locking position when the coil 23 is de-energised. A position sensor 26 is provided for detecting the position of the bolt 20. An additional position sensor may also be provided for detecting the position of the movable core 24. Typical position sensors may include end limit switches, which provide a contact closure at or near the limit of the travel of the bolt 20 and the movable core 24.

An array of parking devices according to the present invention can be installed in the parking area, each parking device being connected via a line L to a parking area monitoring and control system which will permit parking supervisory and control functions to be performed. This parking management system will be included in a column-type parking meter installed in the parking area. The term "point" as referred to in the following means any parking device connected to the parking meter.

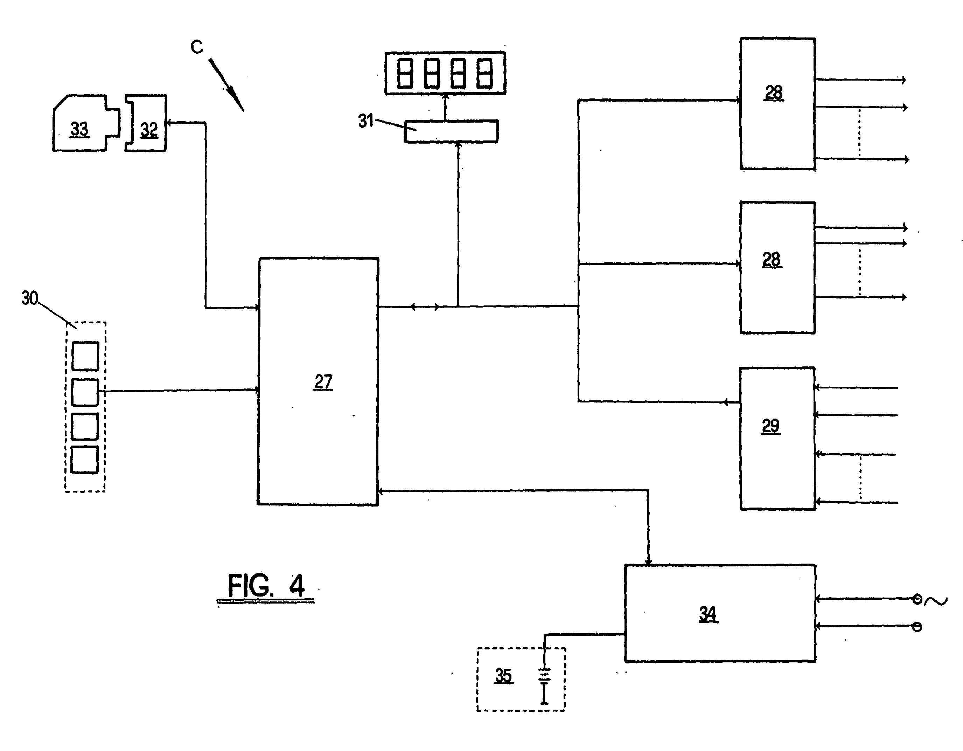

In Fig. 4 there is shown, designated by C, a block diagram of the parking area monitoring and control system which is included in the parking meter. In a typical configuration, with approximately up to 100 points, the parking area monitoring and control system will consist of the following major components:
- a central control unit 27 acting as co-ordinator of the overall system,
- user interface devices 30, 31 and 32 for accepting user commands, displaying data and alarms and activating the system,
- sensor and control interface devices 28 and 29 for collecting data from sensors and issuing control commands to control devices,
- a power line conditioner 34 for regulating voltage and providing noise isolation, and
- a battery back-up device 35 for operating the system in back-up mode when a power outage occurs.
Additionally, the monitoring and control system for the parking area also may comprise a real time clock with battery back up for synchronising the system clock at regular intervals, a mass storage device for storing or retrieving data and interface devices for specific equipment, such as a printer.

The primary task of the central control unit 27 is to perform computations and logical decisions necessary to accomplish central supervisory monitoring and control of the parking devices 10. Further tasks of the central control unit 27 are control of peripheral devices, user interfaces, alarm reporting and events logging. The central control unit 27 is a complete computer system consisting of a central processing unit, a memory, an I/O bus and a system time base generator.

The user interface devices include a dedicated keyboard 30 for entry of user commands, a display 31 for displaying system status, operating parameters, alarms and data, and an I/O port 32 for an electronic key or card 33 by means of which the user engages the system in activity.

The sensor and control interface devices 28,29 act as I/O devices for the central control unit 27 and the sensors and controls at the points connected to parking area monitoring and control system. The sensor and control interface devices 28,29 communicate with the central control unit 27, where the latter generates commands to operate control devices at the points and accepts information for updating operational parameters, display system and point status, logging of events, generation of reports and alarm reporting for conditions such as malfunctions and theft attempts at the connected points. In order to perform such I/O functions, the sensor and control devices 28,29 functionally include multiplexers for handling digital or analog signals from and to the connected points.

The power line conditioner 34 protects the parking area monitoring and control system from power line fluctuation and noise which can result in computation errors, erratic operation, loss of data, overheating, circuit burnout and computer shutdown. The power line conditioner 34 also provides attenuation of power line noise by use of isolation transformers. The power line conditioner 34 provides a constant voltage source by use of solid state regulators that provide fast response to changes in incoming voltage or load conditions. When the power line conditioner 34 senses a power failure, a failover controller switches over a back-up mode of operation by connecting the system to a back-up battery 35.

Hereinafter, a description will be given of the operation of the parking device and the parking area monitoring and control system according to the present invention.

As already said, the parking area monitoring and control system of the present invention is activated by means of an electronic key or card 33 to which a predetermined amount of money corresponds. The electronic card 33 is provided with a memory where all parking operations and amounts subtracted from the initial amount of the card are stored or retrieved.

The procedure performed by the user for parking the vehicle is the following. Firstly, the user will insert the electronic key or card 33 in the I/O port 32 of the parking area monitoring and control system C. Thereafter, the display 31 will display the disposable amount of the card, the vacant parking space allotted to the user, the time when the parking starts and other useful information. At the same time, the number of the allotted parking space and other data relating to the parking operations will be stored in the memory of the electronic card 33, while the parking area monitoring and control system will generate and issue a control command to unlock the parking device installed in the allotted parking space so as to permit the user to park the vehicle.

Then, the user will insert the front wheel of the vehicle into the housing R of the supporting frame S, by adjusting, if necessary, the width of housing to that of the tyres, and will secure the vehicle to the parking device 10 by passing the bolt 20 through the spokes of the vehicle wheel or the tubes forming the bicycle frame, because the arm members 17,18 are extensible and pivotable, and finally the user will introduce the bolt 20 into the lock 21. When the position sensor detects the insertion of the bolt 20 into the lock 21, an input signal is collected by the parking area monitoring and control system, which will then generate and issue a control command to lock the parking device 10.

The user then may temporarily leave the vehicle in the parking area. If the vehicle is provided with a stand, there will be no need to insert the front wheel of the vehicle into the housing R and since the arm members 17,18 are pivotable and extensible, it always will be possible to secure the vehicle to the parking device 10.

In order to pick-up again the parked vehicle, the user will have to insert again the electronic card 33 in the I/O port 32 of the parking area monitoring and control system C. Thereafter, the monitoring and control system will retrieve from the memory of the electronic card the data corresponding to the allotted parking space and will subtract the amount due according to the time the parking last. Finally, the parking area monitoring and control system C will display the remaining amount of the electronic card on the display 31 and will generate and issue a control command to unlock the parking device where the vehicle of the user is parked.

Of course, the device for parking two wheeled vehicles also can be used in parking areas without parking meters with the parking area monitoring and control system C of the invention. In this case, the locks 21 will be of mechanical type.

From the foregoing, it can be clearly understood that the device achieves the addressed objects and, in particular, it can be noticed that it provides a parking device which can be used for supporting any kind of two wheeled vehicle and secure it against theft.

Another important feature of the invention is represented by the fact that it is remunerative for whom is the manager of a parking area for two-wheeled vehicles and it permits the installation costs to be amortised in a fairly short time.

The parking device and the parking area monitoring and control system according to the invention are susceptible of numerous changes and variations all within the scope of the claims. Practically, any material as well as dimension according the requirements and to the state of the art may be used.

## Claims

1. A parking device for two-wheeled vehicles, comprising a supporting frame (S), a housing (R) adapted to removably receive a wheel of the vehicle, a pair of extensible arm members (17,18) connected to each other and each pivotally jointed at one end to said supporting frame (S), a bolt (20) adapted to slide in a hollow member (19) provided at the free end of one of said arm members (17,18) without being disengageable therefrom, a lock (21) arranged at the free end of the other one of said arm members (17,18) and adapted to cooperate with said bolt (20) for securing the vehicle to the supporting frame (S).

2. Device according to claim 1, whereby the housing (R) for the vehicle wheel is formed of two upright U-shaped members (15,16) arranged in spaced relationship and connected to said supporting frame (S).

3. Device according to claim 2, whereby at least one of said upright U-shaped members (15,16) is provided with adjusting means for adjusting its position in order to accommodate the housing (R) to receive wheels having tyres of different widths

4. Device according to claim 1, whereby said hollow member (19) adapted to receive the bolt (20) is articulated.

5. Device according to claim 1, whereby provision is made for mechanic or pneumatic means for holding the pair of arm members (17,18) in a substantially upright rest position.

6. Device according to claim 1, whereby said supporting frame (S) is provided with attachment means for fastening it to ground or to a fixed structure.

7. Device according to any of preceding claims, whereby said supporting frame (S), said upright U-shaped members (15,16), said pair of arm members (17,18), said bolt (20) and said lock (21) are made of weatherproof material.

8. Device according to claim 1, whereby said lock (21) is an electromechanical operated lock and includes a control device (22) with a plunging member (24) for locking and unlocking the bolt (20) and position sensors for detecting the position of the bolt (20) and of the plunging member (24).

9. Parking area comprising parking devices according to claims 1 to 8, the parking area being provided with at least a parking meter, whereby the lock (21) of each device installed in said parking area is connected to the parking meter and whereby provision is made for a parking area monitoring and control system (C) included in the parking meter and consisting of:
- a central control unit (27) acting as co-ordinator of the overall system,
- user interface devices (30,31,32) for accepting user commands, displaying data and alarms and activating the system,
- sensor and control interface devices (28,29) for collecting data from position sensors and issuing control commands to control devices,
- a power line conditioner (34) for regulating voltage and providing noise isolation, and
- a battery back-up device (35) for operating the system in back-up mode when a power outage occurs.

## Patentansprüche

1. Einrichtung zum Abstellen von Zweiradfahrzeugen, bestehend aus einem Stützrahmen (S), einem zur abnehmbaren Aufnahme eines Fahrzeugrades geeignetes Gestell (R), zwei miteinander verbundenen ausstreckbaren Armen (17,18), die jeweils an einem Ende mit dem Stützrahmen (S) drehbar verbunden sind, einem Bolzen (20), der in einem am freien Ende eines der ausstreckbaren Arme (17,18) vorgesehenen Hohlglied (19) schwenkbar ist, ohne dabei außer Eingriff davon gebracht zu werden, einem am freien Ende des anderen der beiden Arme (17,18) angeordneten Schloß (21), um mit dem Bolzen (20) zusammenzuarbeiten, um das Fahrzeug am Stützrahmen (S) zu befestigen.

2. Einrichtung nach Anspruch 1, worin das Gestell (R) für das Fahrzeugrad aus zwei senkrechten U-förmigen Elementen (15,16) gebildet ist, die mit Abstand davon angeordnet und mit dem Stützrahmen (S) verbunden sind.

3. Einrichtung nach Anspruch 2, worin zumindest eines der senkrechten U-förmigen Elemente (15,16) mit Reguliermitteln zum Einstellen ihrer Stellung versehen ist, um das Gestell (R) zur Aufnahme von mit Reifen verschiedener Breite versehene Räder unterzubringen.

4. Einrichtung nach Anspruch 1, worin das zur Aufnahme des Bolzens (20) vorgesehene Hohlglied (19) gelenkig ist.

5. Einrichtung nach Anspruch 1, worin mechanische oder pneumatische Mittel zum Festhalten der beiden Arme (17,18) in einer im wesentlichen senkrechten Ruhestellung vorgesehen werden.

6. Einrichtung nach Anspruch 1, worin der Stützrahmen (S) mit Befestigungsmitteln versehen ist, um ihn am Boden oder an einer feststehenden Struktur zu befestigen.

7. Einrichtung nach einem der vorhergehenden Ansprüche, worin der Stützrahmen (S), die senkrechten U-förmigen Elemente (15,16), die beiden Arme (17,18), der Bolzen (20) und das Schloß (21) aus wetterfestem Material gefertigt sind.

8. Einrichtung nach Anspruch 1, worin das Schloß (21) ein elektromechanisch betätigtes Schloß ist und eine Steuervorrichtung (22) mit einem Tauchelement (24) zum Absperren und Freigeben des Bolzens (20) und Positionssensoren zum Ertasten der Position des Bolzens (20) und des Tauchelements (24) einschließt.

9. Abstellbereich, bestehend aus Abstelleinrichtungen nach Anspruch 1 bis 8, wobei der Abstellbereich mit mindestens einer Parkuhr versehen ist, worin das Schloß (21) einer jeden am Abstellbereich installierten Einrichtung mit der Parkuhr verbunden ist und worin ein zur Monitorüberwachung des Abstellbereiches und in der Parkuhr inbegriffenen Steuersystem (C) vorgesehen ist und bestehend aus:
- einer zentralen Steuereinheit (27), die als Koordinator des Gesamtsteuersystems wirkt,
- Interface Vorrichtungen (30,31,32) für den Benutzer zum Empfang der Befehle des Benutzers, zum Darstellen von Daten und Alarmen und zum Aktivieren des Steuersystems,
- Sensoren- und Steuer-Interface Einrichtungen (28,29) zur Datensammlung aus Positionssensoren und zur Abgabe von Steuerbefehlen an Steuervorrichtungen,
- einem Stromleitungsregler (34) zur Spannungsregulierung und zur Geräuschisolierung, und
- eine Gangreserve-Batterie (35) zum Betätigen des Steuersystems in Reservemode, wenn ein Stromausfall eintritt.

## Revendications

1. Un dispositif de parcage pour véhicule à deux roues comportant un cadre de support (S), une cage (R) pour recevoir de façon amovible une roue du véhicule, deux bras extensibles (17,18) reliés l'un à l'autre de manière pivotante à une extrémité dudit cadre de support (S), un boulon (20) coulissant dans un élément creux (19) prévu à l'extrémité libre de l'un desdits bras (17,18), sans être dégagé, une serrure (21) arrangée à l'extrémité libre de l'un desdits bras (17,18) pour coopérer avec ledit boulon (20) dans le but d'assurer le véhicule au cadre de support (S).

2. Dispositif selon la revendication 1, dans lequel la cage (R) pour la roue du véhicule est formée de deux éléments perpendiculaires en forme d'un U (15,16), qui sont écartés l'un de l'autre et reliés audit cadre de support (S).

3. Dispositif selon la revendication 2, dans lequel au moins l'un desdits éléments perpendiculaires en forme d'un U (15,16) est pourvu de moyens de réglage pour régler sa position de façon à arranger la cage (R) pour recevoir des roues avec pneus ayant différentes largeurs.

4. Dispositif selon la revendication 1, dans lequel ledit élément creux (19) recevant le boulon (20) est articulé.

5. Dispositif selon la revendication 1, dans lequel des moyens mécaniques ou pneumatiques sont prévues pour retenir les deux bras (17,18) dans la position de reste verticale.

6. Dispositif selon la revendication 1, dans lequel ledit cadre de support (S) est pourvu de moyens de fixage pour le fixer sur le terrain ou à une structure fixe.

7. Dispositif selon l'une des revendications précédentes, dans lequel ledit cadre de support (S), lesdits éléments perpendiculaires en forme d'un U, lesdits bras (17,18), ledit boulon (20) et ladite serrure (21) sont fabriqués en un matériau résistant aux intempéries.

8. Dispositif selon la revendication 1, dans lequel ladite serrure (21) est une serrure opérée électromécaniquement et comportant un dispositif de commande (22) avec un élément plongeur (24) pour bloquer et débloquer le boulon (20) et des senseurs de position pour détecter la position du boulon (20) et de l'élément plongeur (24).

9. Parc de parcage comportant les dispositifs de parcage selon les revendications 1 à 8, le parc de parcage étant pourvu au moins d'un dispositif de mesure de parcage, dans lequel la serrure (21) de chaque dispositif de parcage installé sur ce parc de parcage est relié au dispositif de mesure de parcage, et dans lequel on a prévu un système de contrôle (C) et de monitorage du parc de parcage compris dans le dispositif de mesure de parcage, et comportant :
- une unité de contrôle centrale (27) agissant comme un coordinateur de l'entier système,
- des dispositifs d'interface (30,31,32) de l'utilisateur pour accepter ses commands, révéler les donnés et les alarmes et activer le système,
- des dispositifs senseur et de contrôle d'interface (28,29) pour collecter des donnés des senseurs de position et émettre commandes de contrôle vers les dispositifs de contrôle,
- un conditionneur de ligne électrique (34) pour régler le voltage et pour l'isolation de bruit, et
- une batterie de secours (35) pour actionner le système dans le mode de réserve en cas de manque de courant électrique.
